Europäisches Patentamt

European Patent Office

Office européen des brevets

(19)

(11) Veröffentlichungsnummer: **0 034 325**
**B1**

(12) # EUROPÄISCHE PATENTSCHRIFT

(45) Veröffentlichungstag der Patentschrift:
25.04.84

(51) Int. Cl.³: **G 01 J 3/28**

(21) Anmeldenummer: 81100923.2

(22) Anmeldetag: **10.02.81**

(54) Zweistrahl-Interferometer zur Fourierspektroskopie.

(30) Priorität: **14.02.80 DE 3005520**

(43) Veröffentlichungstag der Anmeldung:
**26.08.81 Patentblatt 81/34**

(45) Bekanntmachung des Hinweises auf die Patenterteilung:
**25.04.84 Patentblatt 84/17**

(84) Benannte Vertragsstaaten:
**BE CH FR GB IT LI NL**

(56) Entgegenhaltungen:
**GB - A - 1 010 277**

**G.A. VANASSE et al.: "Aspen International Conference on Fourier Spectroscopy, 1970", Seiten 43-53 Rapport AFCRL 71-0019, 1971 Ausg.: AFRCL Bedford, Mass., U.S.A. W. STEEL: "Interferometers for Fourier Spectroscopy"**

(73) Patentinhaber: **Kayser-Threde GmbH, Würmtalstrasse 2, D-8000 München 70 (DE)**

(72) Erfinder: **Burkert, Peter, Dipl.-Phys, Ansprengerstrasse 15, D-8000 München 40 (DE)**

(74) Vertreter: **Hoffmann, Klaus, Dr. rer. nat. et al, Hoffmann . Eitle & Partner Patentanwälte Arabellastrasse 4, D-8000 München 81 (DE)**

Zweistrahl-Interferometer zur Fourierspektroskopie

Die Erfindung betrifft ein Zweistrahl-Interferometer zur Fourierspektroskopie, insbesondere zur Strahlenmessung in Kryostaten an Bord von Raumflugkörpern, bestehend aus einem im Meßstrahlengang angeordneten Strahlteiler, einem ersten Reflektorsystem, einem zweiten Reflektorsystem und einem Detektorsystem zur Registrierung der Meßstrahlung, wobei mindestens eines der beiden Reflektorsysteme einen bewegbaren, und zwar drehbar gelagerten Retroreflektor und einen rückreflektierenden feststehenden Spiegel aufweist. Dieser bewegbare Retroreflektor ist Teil eines sowohl gegen räumliches Kippen als auch Querversatz unempfindlichen optischen Systems, welches in der folgenden Beschreibung und den Ansprüchen als vollkompensierendes optisches System bezeichnet wird.

Zweistrahl-Interferometer wurden bekanntlich klassisch in der Form von Michelson-Interferometern zur exakten Längenmessung verwendet, wobei mit Hilfe der bekannten, quasi-monochromatischen Meßstrahlung im Interferometer der unbekannte mechanische Hub des bewegten Spiegels vermessen wird. Die dazu inverse Meßaufgabe ist die Bestimmung des unbekannten Spektrums der in das Interferometer geleiteten Meßstrahlung aufgrund des genau bekannten Bewegungsprofils des bewegten Spiegels (Fourierspektroskopie). Die Fourierspektroskopie als Mittel zur spektroskopischen Analyse unbekannter Meßstrahlungen fand in der Meßtechnik erst Anfang der 60er Jahre Eingang, als die Entwicklung der EDV-Technik erstmalig Rechner zur Verfügung stellte, die in der Lage waren, die erhaltenen Interferogramme numerisch auszuwerten. Zur Fourierspektroskopie wird die zu untersuchende Strahlung in ein Zweistrahl-Interferometer, beispielsweise ein Michelson-Interferometer, geschickt, wo sie mittels eines halbdurchlässigen Strahlteilers in zwei Bündel geteilt wird.

Diese werden nach Reflexion an zwei Spiegeln einander überlagert und zur Interferenz gebracht. Einer der beiden Spiegel wird dabei durch einen geeigneten mechanischen Antrieb in Strahlrichtung bewegt, wobei die Intensitätsschwankung des zentralen Fleckes im Interferenzbild in Abhängigkeit von der Position des bewegten Spiegels registriert wird. Das so erhaltene Signal (Interferogramm) ist die Fouriertransformierte des Energiespektrums, d. h. die Strahlungsstärke in Abhängigkeit von der Wellenlänge der interferierenden Strahlung. Fourierspektroskopie wird zur Aufnahme sowohl von Emissionsspektren als auch von Absorptionsspektren angewendet. Wegen der besseren Meßbedingungen außerhalb der Erdatmosphäre hat man Michelson-Interferometer zur Strahlungsmessung extraterrestrischer Strahlung schon Ende der 60er Jahre auch in Raumflugkörpern mitgeführt. Meßtechnisch geht man dabei so vor, daß die Detektorsignale gegebenenfalls zwischengespeichert und dann in einem Computer ausgewertet werden.

Es stehen verschiedene Methoden zur Aufnahme des Interferogrammes zur Verfügung. Nach dem Abtasttheorem der Informationstheorie ist es ausreichend, das Interferogramm lediglich an bestimmten, genau definierten Spiegelstellungen zu messen. Position und Auswahl dieser Stellungen hängen von der Meßaufgabe ab. Neben dem klassischen schrittweisen Spiegelvorschub gibt es auch die Methode, bei welcher der bewegte Spiegel mit konstanter Geschwindigkeit kontinuierlich verschoben wird. Diese Methode ist beim Einsatz auf schnellbewegten Meßplattformen oder bei der Aufnahme von Prozessen kurzer Lebensdauer notwendig.

Typische Scan-Zeiten moderner kontinuierlich scannender Interferometer liegen in der Größenordnung von einer Sekunde bis etwa einige Minuten pro Interferogramm. In der Praxis ist beim kontinuierlichen Vorschub eine möglichst konstante Vorschubgeschwindigkeit anzustreben. Geschwindigkeitsschwankungen im Bereich von wenigen Prozent sind zulässig, wobei Vibrationen, die vom Antriebsmotor auf den bewegten Reflektor übertragen werden, möglichst zu vermeiden sind. Die geradlinige Vorschubbewegung des bewegten Reflektors erfolgt normalerweise mittels einer Spindel oder einer ähnlichen Einrichtung entlang einer oder mehrerer Führungsschienen.

Wie schon erwähnt, führt jede Störung der idealen Spiegelführung, beispielsweise ein Verkippen des Planspiegels beim Michelson-Interferometer, zu einer unerwünschten Störung des Interferogrammes. Wegen der äußerst hohen technischen Anforderungen an die Genauigkeit der Spiegelführung des bewegten Planspiegels hat man anstelle der Planspiegel bereits hochwertige Retroreflektoren eingesetzt, welche die einfallende Strahlung in die gleiche Richtung zurückwerfen, aus der sie ankommt.

Zweistrahl-Interferometer zur Fourierspektroskopie, die mit Retroreflektoren als bewegten Reflektoren ausgerüstet sind, sind in zahlreichen Konfigurationen bekannt. Verwiesen wird hier lediglich beispielsweise auf den Bericht der 1. International Conference in Fourierspektroskopie 1970 der Autoren G. A. Vanasse et al., veröffentlicht von Airforce Cambridge Research Laboratories, L. G. Hanscom Field, Bedford, Mass./USA, S. 43—53.

Als Retroreflektoren kommen Tripelspiegel, als Vollprismen ausgebildete Kubusecken, Cat's eyes in Spiegel- oder Linsenausführung sowie auch Dachkantspiegel bzw. Dachkantprismen zur Anwendung.

Beim einfachen Ersatz der Planspiegel in einem klassischen Michelson-Interferometer durch derartige Retroreflektoren bleibt jedoch die Genauigkeitsanforderung an die Geradlinigkeit der Reflektorbewegung bestehen, da ein Querversatz des Retroreflektors während seines Vorschubes das Interferogramm stört. Um diesem Nachteil zu begegnen, wurden auch bereits optische Systeme vorgeschlagen, die sowohl gegen Verkippen als auch Querversatz des Reflektors unempfindlich sind. Diese optischen Systeme zeichnen sich durch die Kombination eines jeweils total reflektierenden Retroreflektors der obengenannten Art, z. B. Kubusekke oder Cat's eye mit einem feststehenden Spiegel, aus. Ein Beispiel für ein derartiges optisches System ist das Terrien-System, welches aus der Kombination einer Kubusecke mit einem feststehenden Spiegel besteht (vgl. zum Beispiel J. Dyson »Interferometry as a measuring tool«, Verlag The Machinery Publishing Company 1970, S. 92) oder die Kombination eines Cat's eye mit einem feststehenden Spiegel (vgl. zum Beispiel den Aufsatz von R. A. Schindler »An Interference Spectrometer for the Remote Sensing of Pollutants« im Journal Spacecraft, Band 9, Heft Nr. 5, Seite 714).

Aus der GB-A-1 010 277 ist ein Zweistrahl-Interferometer zur Fourierspektroskopie bekanntgeworden, welches gleichfalls aus einem im Meßstrahlengang eingeordneten Strahlteiler, einem ersten Reflektorsystem und einem zweiten Reflektorsystem sowie einem Detektorsystem zur Registrierung der Meßstrahlung besteht, wobei das erste Reflektorsystem ein feststehender Reflektor ist und das zweite Reflektorsystem einen bewegbaren Retroreflektor in Form eines Dachkantsspiegels enthält. Dieser bewegliche Retroreflektor ist um eine Achse drehbar, die parallel zur Schnittlinie der beiden Dachkantspiegel verläuft.

Ein derartiges Interferometer unterliegt verschiedenen Beschränkungen: Zunächst ist eine kontinuierliche, praktisch gleichförmige und reibungsfreie Messung über den Scanbereich nicht möglich. Das bekannte Interferometer arbeitet mit schrittweisem Vorschub. Durch die Verwendung eines Choppers wird bei der bekannten Einrichtung ein AC-Signal erzeugt, welches nach Interferenz dem Detektorsystem zur Auswertung zugeführt wird. Eine derartige Meßmethode ist zur Erforschung schwacher Strahlungsquellen ungeeignet. Der verschwenkbare Dachkantspiegel ist im übrigen lediglich gegen Strahlverkippungen in der Zeichenebene von Fig. 1 der GB-A-1 010 277 und Parallelebenen dazu unempfindlich. Man hat hier also nur ein teilkompensierendes optisches System vor sich. Daher muß die Drehachse des Dachkantspiegels eine starre Achse sein und genau parallel zur Schnittlinie der beiden Spiegelebenen liegen. Verwindungen der Achse oder gar ein räumliches Verkippen würden die Auswertung des Interferogramms unmöglich machen. Ferner sollte die Rotationsachse für die Verdrehung des Dachkantspiegels vernünftigerweise in einer der Spiegelebenen liegen, da andernfalls die Auswertung des Interferogramms zu kompliziert wird.

Aus diesen Beschränkungen wird erkennbar, daß das vorbekannte Interferometer gemäß GB-A-1 010 277 zur Lösung der erfindungsgemäßen Aufgabe, geschweige denn zur Lösung dieser Aufgaben im kryogenen Bereich nicht geeignet ist.

Bei einem derzeit in den USA im Bau befindlichen Zweistrahl-Interferometer zur Messung der atmosphärischen Transmission, dem Atmos-Experiment für eine zukünftige Spacelab-Mission, werden beispielsweise beide Spiegel für das Interferometer von mit Cat's eyes bestückten, voll kompensierenden Retroreflektoren mit linearer Führung gebildet, die maschinell angetrieben sind, wobei ein erheblicher Aufwand für diesen Antrieb notwendig ist, der das Gerät relativ groß und schwer macht. Für normale Messungen in ungekühlter Umgebung mögen derartige Geräte bei einem großen Raumflugkörper, wie Spacelab, tolerierbar sein, bei kleineren Flugkörpern und/oder Messungen im Tieftemperaturbereich, die in Kryostaten durchgeführt werden, ist eine der wichtigsten Anforderungen an die in den Kryokammern unterzubringenden Meßgeräte geringes Gewicht und kleine Abmessung sowie äußerst geringe eigene Wärmeentwicklung. Der hohe experimentelle Aufwand für die Durchführung von Tieftemperaturmessungen in Kryostaten ist zur Messung sehr schwacher Strahlung erforderlich, um zu vermeiden, daß die Eigenstrahlung des Meßinstrumentes die aufzunehmende Meßstrahlung überdeckt. Um den Kühlmittelverbrauch der Kryostaten im Verlauf längerer Experimente mit Raumflugkörpern möglichst gering zu halten, muß darauf geachtet werden, daß die Wärmeentwicklung im kryostatischen System selbst auf ein Minimum beschränkt ist. Reibungsverluste durch Gleitführungen, Spindelführungen und ähnliche mechanische Führungen von schnell bewegten Teilen sind daher in Kryo-Umgebung zu minimieren. Dies gilt selbstverständlich auch für die Führungen von Retroreflektoren schnell scannender Interferometer, wie man sie für die Strahlungsmessung an Bord von Raumflugkörpern benötigt.

Es ist daher das Ziel der Erfindung, ein Zweistrahl-Interferometer zur Fourierspektroskopie der eingangs genannten Art, d. h. insbesondere zur Strahlungsmessung in Kryostaten an Bord von Raumflugkörpern, zu schaffen, bei welchem der bewegte Reflektor bzw. bei Verwendung von zwei bewegten Reflektoren diese längs seines/ihres optischen Weges möglichst gleichförmig und unter Minimierung von Reibungswärme beim Vorschub über den Scanbereich verfahren wird/werden.

Diese Aufgabe wird erfindungsgemäß mit einem Zweistrahl-Interferometer der eingangs genannten Art gelöst, welches dadurch gekennzeichnet ist, daß der bewegbare Retroreflektor Teil eines vollkompensierenden optischen Reflektorsystems ist und daß dieser bewegbare Retroreflektor an einem starren Pendel befestigt ist, welches über den Scan-Bereich kontinuierlich, praktisch gleichförmig und reibungsfrei mit Ausnahme der Lagerreibung des Pendels geführt ist.

Erstaunlicherweise ist der bei der Pendelbewegung des Retroreflektors gegenüber seiner gleichmäßigen geradlinigen Bewegung auftretende Systemfehler in bezug auf die Geschwindigkeitsänderung vernachlässigbar gering. Die optische Vorschubgeschwindigkeit im variablen Interferometerarm weicht somit nur außerordentlich wenig von der gewünschten gleichmäßigen Geschwindigkeit ab. Diese Abweichung ist von der Krümmung der Kurve abhängig, auf der der Retroreflektor geführt ist. Die durch diese Krümmung verursachte systemimmanente Abweichung der realen optischen Vorschubgeschwindigkeit und der idealen konstanten Vorschubgeschwindigkeit ist in der Praxis kleiner als die Geschwindigkeitsdifferenz, die man bei linearem Vorschub des Reflektorsystems auf geradlinigen Führungen normalerweise erzielt. Eine schwach gekrümmte Führungslinie für die Bahn des Retroreflektors ist demnach für die Fourierspektroskopie funktionell gleichwertig einer geradlinigen Führungslinie, wenn geeignete Retroreflektorsysteme eingesetzt werden.

Obwohl in der Literatur (vgl. den Artikel »A New Principle in Interferometer Design« von E. R. Peck im Journal of the Optical Society of America, Band 38, Heft 1, Januar 1948) bereits kurz nach dem 2. Weltkrieg vorgeschlagen wurde, bei einem speziellen Zweistrahl-Interferometer zur Winkelbestimmung mittels Längenmessung in dessen variablen Arm einen aus einem Dachkantspiegel oder einem Tripelspiegel bzw. einer Kubusecke als Vollprisma gebildeten Retroreflektor mittels eines rotierenden Armes zu führen, hat dieser Vorschlag in der Folgezeit die Fachleute nicht angeregt, den hier erstmals vorgeschlagenen Weg bei der Konstruktion von Zweistrahl-Interferometern für die Fourierspektroskopie zu gehen. Sie sind vielmehr bis heute, wie auch der Vorschlag für das Atmos-Experiment zeigt, bemüht, den bzw. die bewegten Retroreflektoren jeweils geradlinig zu führen.

Bei dem von Peck vorgeschlagenen Interferometer ergibt sich nämlich notwendigerweise ein Querversatz des Reflektors auf seiner Kreisbahn, der das Interferenzbild stört. Diese Störung mag beim Einsatz als Längenmeßgerät mit quasi-monochromatischem Licht tolerierbar sein; beim Fourier-Interferometer würde der Querversatz des Retroreflektors jedoch zu Störungen im zentralen Fleck des Interferenzbildes führen, so daß die spektroskopische Auswertung einer breitbandigeren Meßstrahlung praktisch nicht mehr möglich ist. Aus diesem Vorschlag wurde nicht erkannt, daß die starre Pendelaufhängung eine günstige Möglichkeit zum Vorschub der Retroreflektoren bei Fourierspektrometern bietet.

Die erfindungsgemäße Lösung, nämlich den bzw. die bewegten Retroreflektoren an einem starren Pendelarm zu führen und dadurch eine deutliche Abweichung von der geradlinigen Bewegung bewußt in Kauf zu nehmen, bringt systematisch für die Fourierspektroskopie keinerlei Vorteile; die Vorteile des neuen Interferometers ergeben sich vielmehr aus der günstigen Pendellagerung, geringer Lagerreibung, die für die Feldmessung Vorteile bringt und seinen kryostatischen Einsatz für schnell scannende Messungen hoher Auflösung an Bord von Raumflugkörpern mit vertretbarem Aufwand überhaupt erst ermöglicht.

Die Reibung im Pendellager kann durch Einsatz von Kugellagern bzw. Magnetlagern so gering gehalten werden, daß beispielsweise beim Freilaufbetrieb nur ein Wärmeanfall von etwa 10 mW bei größeren optischen Vorschubgeschwindigkeiten von 10 cm/s auftritt, während der Wärmeanfall beim Antrieb über konventionelle geradlinige Führungen um den Faktor von 20 bis 100 größer ist.

Gemäß einer Weiterbildung der Erfindung kann man das Zweistrahl-Interferometer so gestalten, daß auch der erste Reflektor ein bewegter Retroreflektor eines sowohl gegen Verschwenken als auch Querversatz voll kompensierenden optischen Systems, beispielsweise nach Art eines Terrien-Systems, ist, der zusammen mit dem ersten Retroreflektor an einem starren Pendel befestigt ist, wobei dieses starre Pendel zweckmäßigerweise als zweiarmiges Pendel ausgebildet ist, dessen Arme orthogonal zueinander verlaufen.

Wenn man die Retroreflektoren bei einem derartigen Doppelpendel-Interferometer in gleichem Abstand vom Pendellager an den beiden Pendelarmen befestigt, kann man sich sogar die feststehenden Spiegel des voll kompensierenden optischen Systems sparen, da in diesem Fall die Querversätze der beiden Retroreflektoren in jeder Bewegungsphase exakt gleich sind und sich für die spektroskopische Auswertung der so erhaltenen Interferogramme keine Schwierigkeiten ergeben.

Bei genauer Lagerung des Pendels, die sicherstellt, daß die Pendelstruktur mit den Retroreflektoren exakt in einer Ebene schwingt, kann man die voll kompensierenden optischen Systeme auch durch billigere teilkompensierende optische Systeme ersetzen, die aus einer Kombination Dachkantspiegel/feststehender rückreflektierender Planspiegel oder auch Dachkantprisma/feststehender rückreflektierender Planspiegel besteht.

Es besteht auch die Möglichkeit, die Retroreflektoren in einer anderen geometrischen Zuordnung an einer starren Pendelstruktur so anzuordnen, daß gegebenenfalls unter Zuhilfenahme weiterer Umlenkspiegel ein spektroskopisch auswertbares Interferenzbild auf dem Detektorsystem erzielt wird.

Weitere Einzelheiten ergeben sich aus der folgenden Beschreibung der vier in der Zeichnung dargestellten Ausführungsbeispiele der Erfindung. In der Zeichnung zeigt

Fig. 1 eine schematische Ansicht des Zweistrahl-Interferometers nach der Erfindung bei Verwendung eines einarmigen Pendels, an dessen Ende der Retroreflektor eines voll kompensierenden optischen Systems befestigt ist;

Fig. 2 eine Weiterbildung des Zweistrahl-Interferometers gemäß Fig. 1 als Doppelpendel-Interferometer, wobei an den beiden Armen eines Doppelpendels zwei Retroreflektoren zweier voll kompensierender optischer Systeme befestigt sind;

Fig. 3 eine schematische Darstellung einer Variante eines Doppelpendel-Interferometers gemäß Fig. 2, wobei die beiden Retroreflektoren an ein und derselben starren Pendelachse nebeneinander im Abstand befestigt sind;

Fig. 4 eine schematische Darstellung einer weiteren Variante des Doppelpendel-Interferometers nach Fig. 2, wobei die beiden Retroreflektoren an ein und derselben starren Pendelstruktur einander gegenüberliegend und um einen Abstand gegeneinander versetzt befestigt sind;

Fig. 5 eine schematische Ansicht der Anordnung eines Doppelpendel-Interferometers gemäß Fig. 2 mit einem Auswuchtgewicht;

Fig. 6 die schematische Ansicht eines Doppelpendel-Interferometers gemäß Fig. 2, bei welchem die Pendelachse in Richtung eines Schwerefeldes verläuft.

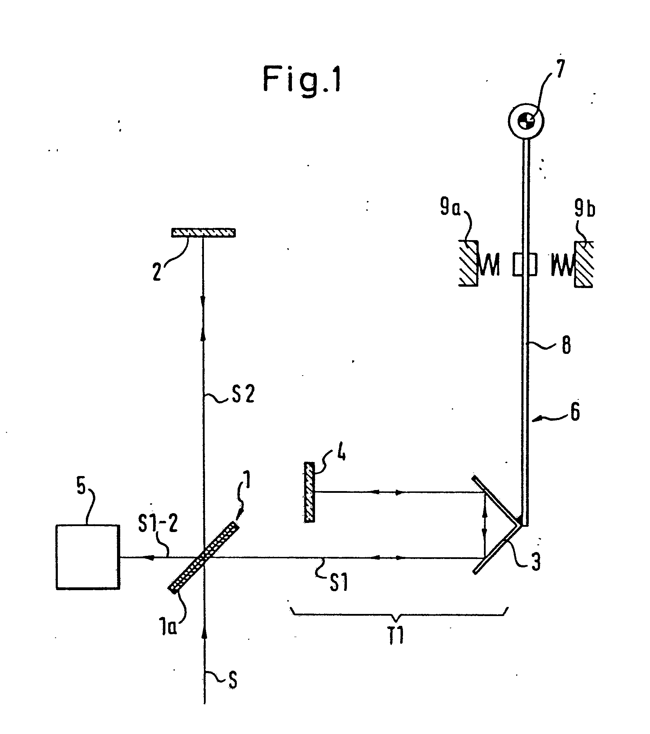

In Fig. 1 ist eine schematische Ansicht des erfindungsgemäßen Zweistrahl-Interferometers zur Fourierspektroskopie gezeigt. Dabei wird die Meßstrahlung S durch den Strahlteiler 1 mit Kompensationsplatte 1a in zwei Teilstrahlungen S1 und S2 aufgeteilt. Die Teilstrahlung S2 wird an dem feststehenden Spiegel 2 in sich selbst reflektiert, zum Strahlteiler 1 zurückgeführt und dort zum Detektor 5 reflektiert, während die Teilstrahlung S1 auf den Retroreflektor 3 auftrifft und diesen querversetzt parallel zur Teilstrahlung S1 wieder verläßt. Diese Teilstrahlung wird vom rückreflektierenden feststehenden Spiegel 4 des voll kompensierenden optischen Systems T1, bestehend aus Retroreflektor 3 und Spiegel 4, in sich selbst reflektiert, verläßt den Retroreflektor wieder an der ursprünglichen Eintrittsstelle und gelangt so durch den Strahlteiler 1 in Interferenz mit der ersten Teilstrahlung S2 und als Strahlung S1−2 zum Detektor 5. Diejenigen Teilstrahlungen, die nach Reflexion bzw. Transmission am Strahlteiler 1 wieder in die Meßstrahlung S zurücklaufen, sind für die Messung verloren.

Der Retroreflektor 3 ist hier am Ende des starren Armes 8 des Pendels 6 befestigt, der um das Lager 7 innerhalb der durch die Hubmagnete 9a, 9b vorgegebenen Toleranzgrenzen schwingen kann. In der Praxis wird man die Bewegung des Pendels 6 so steuern, daß bei Vorgabe einer Länge des Pendelarms von beispielsweise 20 cm und einer Auslenkung von ±1,5° Weglängen mit dem Retroreflektor 3 von ca. 1 cm zurückgelegt werden.

Der Strahlteiler 1 ist mit der Kompensationsplatte 1a in der üblichen Sandwich-Bauweise aufgebaut. Die Hubmagnete 9a, 9b können mit in Fig. 1 dargestellten Federn versehen sein, die die Magnetplättchen am Pendelarm 8 an den Umkehrpunkten der Pendelbewegung elastisch abfedern.

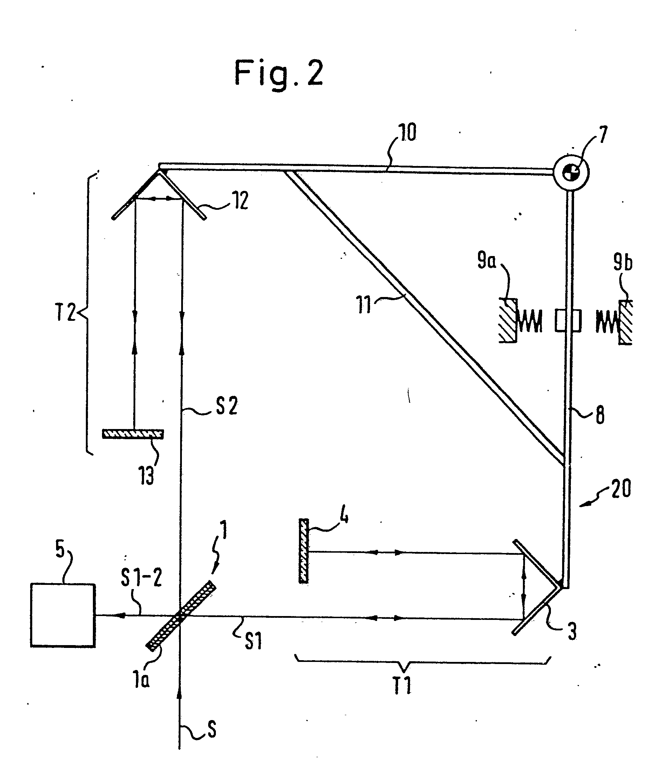

In Fig. 2 ist eine Ausbildung des Zweistrahl-Interferometers von Fig. 1 als Doppelpendel-Interferometer gezeigt, wobei an den beiden Armen 8, 10 eines Doppelpendels 20 zwei Retroreflektoren 3, 12 zweier voll kompensierender optischer Systeme T1, T2 befestigt sind. Da die Pendelführung technisch sehr einfach ist, ist es vorteilhaft, auch den in Fig. 1 feststehenden Reflektor 2 des anderen Interferometerarmes durch ein analoges sowohl gegen Kippen als auch Querversatz unempfindliches optisches System (=voll kompensierendes optisches System) zu ersetzen und dessen Retroreflektor 12 ebenfalls an einem starren Pendelarm 10 der Pendelstruktur 20 zu befestigen. Wie man aus Fig. 2 erkennt, sind die beiden starren Pendelarme 8, 10 senkrecht zueinander am Pendellager 7 befestigt und mittels des Stützarmes 11 ausgesteift.

Das so geschaffene Doppelpendel-Interferometer kann man zur Erzeugung einer optischen Weglängendifferenz um die gemeinsame Drehachse 7 verschwenken; dadurch wird der optische Weg der Teilstrahlung S1 im ersten Interferometerarm bei Verschwenken im Uhrzeigersinn verkürzt, während der optische Weg der Teilstrahlung S2 im zweiten Interferometerarm gleichzeitig verlängert wird bzw. umgekehrt, je nach der Richtung der Pendelbewegung. Auf diese Weise ist der optische Hub beträchtlich zu vergrößern, ohne daß man die Pendelarmlänge und/oder die mechanische Bewegungsamplitude erhöhen muß. Daraus ergeben sich günstige Geräteabmessungen für das Doppelpendel-Interferometer.

Die Meßstrahlung S wird hier in ähnlicher Weise wie beim Interferometer gemäß Fig. 1 am Strahlteiler 1 in die Teilstrahlung S1 und S2 aufgeteilt, die beide nach Durchlaufen der voll kompensierenden optischen Systeme T1 (Kombination des Retroreflektors 3 mit dem rückreflektierenden feststehenden Spiegel 4) bzw. T2 (Kombination des Retroreflektors 12 mit dem rückreflektierenden feststehenden Spiegel 13) in sich selbst reflektiert und nach neuerlichem Durchgang durch den Strahlteiler 1 miteinander zur Interferenz gelangen und die interferierende Teilstrahlung S1−2 zum Detektor 5 zur spektroskopischen Auswertung des Interferenzbildes geleitet werden.

Bei entsprechender Dimensionierung des Strahlteilers 1 bzw. genügend kleiner Scan-Bewegung des Doppelpendels kann man auf die Anordnung der rückreflektierenden feststehenden Spiegel 4 bzw. 13 in den voll kompensierenden optischen Systemen T1 bzw. T2 verzichten und so lediglich die Retroreflektoren 3, 12 vorsehen, wenn man gleichzeitig dafür sorgt, daß dieselben im gleichen Abstand vom Pendellager 7 angeordnet sind. Bei einem derartigen symmetrischen Aufbau hebt sich der Querversatz beider Retroreflektoren während der Vorschubbewegung optisch ausreichend genau auf.

### Beispiel für die Auslegung eines Doppelpendel-Interferometers gemäß Fig. 2

Für die Auslegung eines symmetrischen Doppelpendel-Interferometers nach Fig. 2 eignen sich folgende Maße:

Länge der Pendelarme 8, 10 vom Pendellager 7 zum Befestigungspunkt der Retroreflektoren 3, 12 = 20 cm. Die durchlaufende Winkelamplitude des Doppelpendels = 3,7°. Dabei erhält man einen optischen Hub von 10 cm. Die systematische relative Variation der optischen Vorschubgeschwindigkeit infolge kreisbogenförmiger Führungslinie der beiden Reflektorbewegungen ist hierbei unter $10^{-3}$ gehalten.

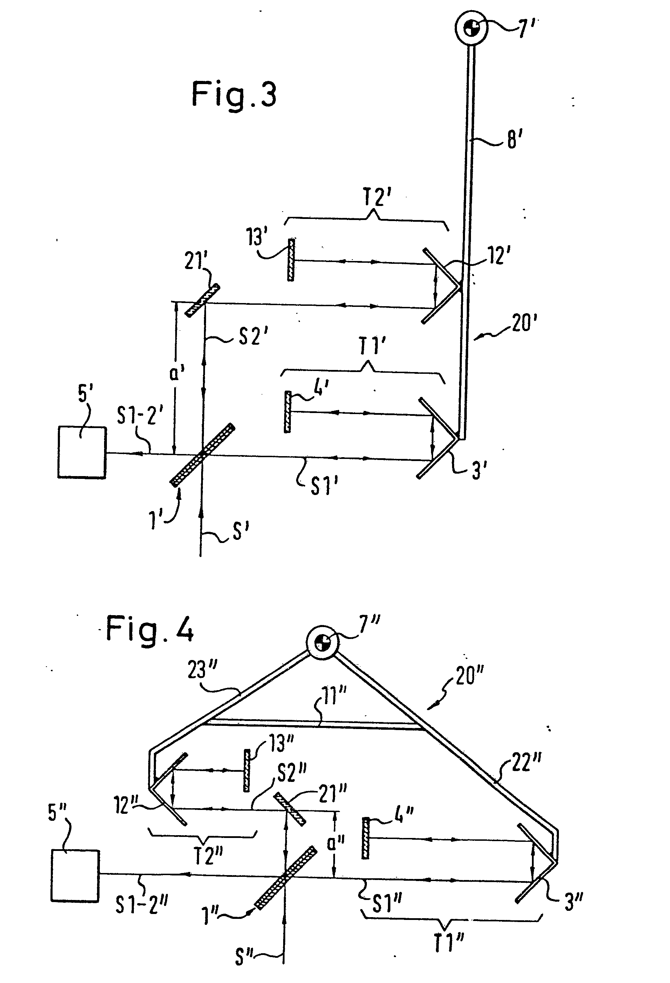

In den Fig. 3 und 4 sind zwei weitere Ausführungsbeispiele für Doppelpendel-Interferometer mit möglichst geringen Abmessungen dargestellt, wobei die entsprechenden Bezugszeichen für gleiche Bauteile in Fig. 3 jeweils mit einem ' und in Fig. 4 mit '' angegeben sind.

Während in Fig. 3 die beiden Retroreflektoren 3' bzw. 12' an einer einzigen starren Pendelachse 8' der Doppelpendelstruktur 20' in einem Abstand a' voneinander befestigt sind und zusammen mit den rückreflektierenden feststehenden Spiegeln 4' bzw. 13' die beiden voll kompensierenden optischen Systeme T1' bzw. T2' bilden, hat die in Fig. 4 gezeigte Interferometerstruktur wieder mehr Ähnlichkeit mit der in Fig. 2 dargestellten.

Bei Fig. 3 wird die Teilstrahlung S2 durch einen Umlenkspiegel 21' auf den über dem Retroreflektor 3' im Abstand a' angeordneten Retroreflektor 12' reflektiert und nach Reflexion am rückreflektierenden feststehenden Spiegel 13' auf dem gleichen Wege wieder zum Strahlteiler 1' und von dort zum Detektor 5' reflektiert, wobei die Interferenzstrahlung S12'' durch Interferenz der reflektierten Teilstrahlung S1' und S2' zustandekommt.

Nach der bisherigen Erläuterung des Strahlungsverlaufes und der Wirkungsweise der Michelson-Interferometer ist auch die Wirkungsweise des Doppelpendel-Interferometers gemäß Fig. 4 ohne weiteres verständlich: Die Meßstrahlung S'' wird im Strahlteiler 1'' in die beiden Teilstrahlungen S1'' und S2'' aufgespalten. Die Teilstrahlung S1'' läuft über den Retroreflektor 3'' und den rückreflektierenden feststehenden Spiegel 4'' auf dem gleichen Weg wieder zurück. Die Teilstrahlung S2'' wird nach Durchlaufen des Strahlteilers 1'' nach der Strecke a'' im Umlenkspiegel 21'' abgelenkt und über den Retroreflektor 12'' auf den rückreflektierenden feststehenden Spiegel 13'' reflektiert und von dort in sich selbst zurückgeführt und gelangt so nach Reflexion am Strahlteiler 1'' in Interferenz mit der reflektierten Teilstrahlung S1'', um so als Interferenzstrahlung S1−2'' zum Detektor 5'' zu gelangen. Durch die geschickte Anordnung der optischen Elemente ist hier eine sehr platzsparende Doppelpendel-Konfiguration 22'' geschaffen. Man erkennt, daß die beiden Arme 22'' und 23'', die mittels des Stützarmes 11'' miteinander verbunden sind, nicht unter einem rechten Winkel zueinander verlaufen, sondern sich unter einem stumpfen Winkel im Pendellager 7'' treffen.

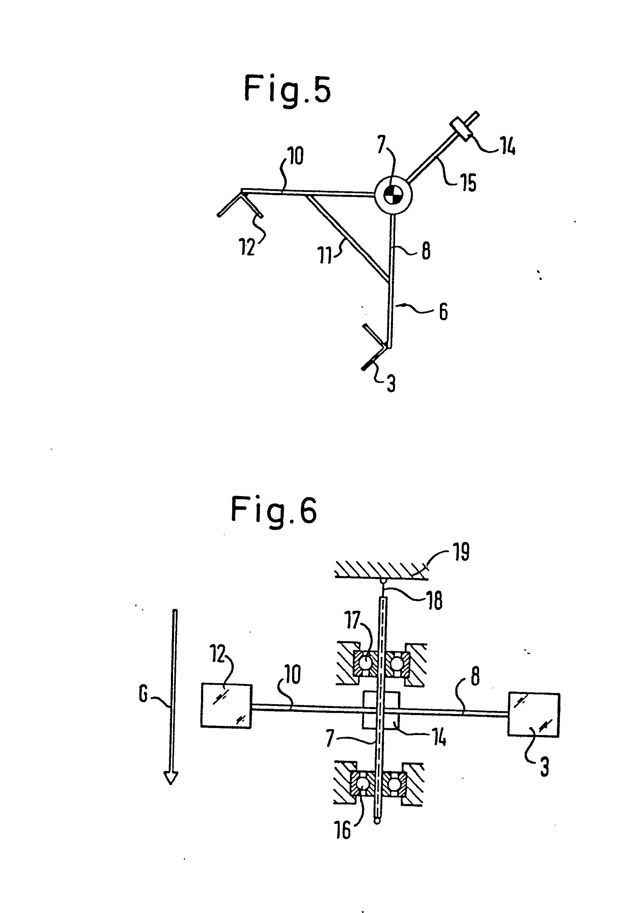

Um das durch die Schwerkraft erzeugte rücktreibende Moment des physikalischen Pendels ausreichend weit herabzusetzen, muß man den Schwerpunkt des Pendels durch Auswuchten ausreichend nahe an den Drehpunkt heranbringen. Im allgemeinen genügt eine Auswuchtgenauigkeit mit einer Schwerpunktlage von etwa 1 mm, um die durch die Schwerkraft bedingte Geschwindigkeitsänderung auf wenige Prozent einzuschränken. Die genauen Werte hängen von Pendellänge, Bewegungsamplitude, d. h. dem optischen Hub und der Scan-Zeit, ab. Eine schematische Darstellung eines mit einem Auswuchtgewicht 14 und einem Zusatzarm 15 ausgestatteten Doppelpendel-Interferometers gemäß Fig. 2 zeigt Fig. 5.

Montiert man die Pendelführung so, daß die Bewegungsebene waagrecht liegt, entfällt das rücktreibende Moment durch die Schwerkraft. Im allgemeinen ist eine Ausrichtung mit mittlerer Wasserwaagengenauigkeit ausreichend, um bei dieser Anordnung die Geschwindigkeitsänderung auf wenige Prozent einzuschränken. Bei Verwendung geeigneter Kugellager kann man die Reibungswärme auch beim schnellen Scannen minimieren.

Ein praktisches Ausführungsbeispiel für eine derartige Anordnung ist schematisch in Fig. 6 dargestellt.

Dabei ist die Pendelachse 7 senkrecht an einem Faden 18 am Träger 19 aufgehängt. Die Achse 7 trägt die Arme 8, 10 eines Doppelpendel-Interferometers gemäß Fig. 5, wobei der Zusatzarm 15, der das Auswuchtgewicht 14 trägt, nicht sichtbar ist. Die Retroreflektoren 3, 12 sind in gleichem Abstand von der Pendelachse 7 angeordnet. Die Kugellager 16, 17 sorgen für einen reibungsarmen Lauf des Interferometers.

Es versteht sich, daß das Zweistrahl-Interferometer nach der Erfindung mit weiteren ein- oder mehrarmigen starren Pendelstrukturen realisierbar ist, die in der Zeichnung nicht dargestellt sind, die jedoch in gleicher Weise die erfindungsgemäße Aufgabe erfüllen.

Für den Einsatz des Interferometers für die Strahlungsmessung an Bord von Raumflugkörpern sei noch darauf hingewiesen, daß durch die Schwerelosigkeit die Bewegungscharakteristik des freilaufenden Vorschubes besonders günstig ist. Der Aufwand an Antriebsenergie für das im ausgewuchteten Zustand, insbesondere aber auch im schwerelosen Zustand, besonders leichtgängige Pendellager, ist äußerst gering, was besonders für Langzeitmessungen unter begrenzter Energieversorgung in den Raumflugkörpern günstig ist. Durch den gedrängten Aufbau des Doppelpendel-Interferometers braucht das Gerät nur wenig Platz.

Sollen Raumflugexperimente zur Messung sehr energiearmer Strahlung noch dazu in kryogener Umgebung durchgeführt werden, bildet das erfindungsgemäße Pendel bzw. Doppelpendel-Interferometer für diese extremen Anforderungen die zur Zeit einfachste Möglichkeit, ohne eine mechanische Durchführung durch die Kryostatenwandung schnell scannenden Zweistrahl-Interferometer mit ausreichend geringer Wärmebelastung zu betreiben.

Schließlich ist das Gerät wegen seiner einfachen Konstruktion verhältnismäßig störunempfindlich gegen Dejustierung. Dies bildet einen wesentlichen Vorteil zur Verwendung des Interferometers auch im Feldeinsatz sowie als Routinegerät im Labor.

**Patentansprüche**

1. Zweistrahl-Interferometer zur Fourierspektroskopie, insbesondere zur Strahlenmessung in Kryostaten an Bord von Raumflugkörpern, bestehend aus einem im Meßstrahlengang angeordneten Strahlteiler (1), einem ersten Reflektorsystem, einem zweiten Reflektorsystem und einem Detektorsystem (5) zur Registrierung der Meßstrahlung, wobei mindestens eines der beiden Reflektorsysteme einen bewegbaren, und zwar drehbar gelagerten Retroreflektor (3) und einen rückreflektierenden feststehenden Spiegel (4) aufweist, dadurch gekennzeichnet, daß der bewegbare Retroreflektor (3) Teil eines vollkompensierenden optischen Reflektorsystems ($T_1$) ist und daß dieser bewegbare Retroreflektor (3) an einem starren Pendel (6) befestigt ist, welches über den Scanbereich kontinuierlich, praktisch gleichförmig und reibungsfrei mit Ausnahme der Lagerreibung des Pendels geführt ist.

2. Zweistrahl-Interferometer nach Anspruch 1, dadurch gekennzeichnet, daß auch das weitere Reflektorsystem ($T_2$, $T_2'$, $T_2''$) ein vollkompensierendes optisches Reflektorsystem mit einem weiteren bewegbaren Retroreflektor (12, 12', 12'') ist, der zusammen mit dem einen Retroreflektor (3, 3', 3'') an dem starren Pendel (20, 20', 20'') befestigt ist.

3. Zweistrahl-Interferometer nach Anspruch 2, dadurch gekennzeichnet, daß das starre Pendel ein zweiarmiges Pendel ist und daß beide bewegbaren Retroreflektoren (3, 12) am Ende je eines Armes (8, 10) des zweiarmigen Pendels (20) befestigt sind, dessen Arme orthogonal zueinander angeordnet sind.

4. Zweistrahl-Interferometer nach Anspruch 3, dadurch gekennzeichnet, daß die beiden bewegbaren Retroreflektoren (3, 12) in gleichem Abstand vom Pendellager (7) an den Armen (8, 10) des zweiarmigen Pendels (20) angeordnet sind.

5. Zweistrahl-Interferometer nach Anspruch 4, dadurch gekennzeichnet, daß die bewegbaren Retroreflektoren von Tripelspiegeln, Kubusecken als Vollprismen, oder Cat's eyes in Spiegel- oder Linsenausführung gebildet sind und die zur Ergänzung der Retroreflektoren zum vollkompensierenden optischen Reflektorsystem dienenden rückreflektierenden feststehenden Spiegel (4, 13) entfallen.

6. Zweistrahl-Interferometer nach Anspruch 2, dadurch gekennzeichnet, daß das starre Pendel ein einarmiges Pendel ist und daß beide bewegbaren Retroreflektoren (3', 12') an diesem Pendel (8') befestigt sind, wobei die vom Strahlenteiler (1') durchgelassene Teilstrahlung (S2') über einen Umlenkspiegel (21') auf den bewegbaren Retroreflektor (12') des weiteren vollkompensierenden optischen Reflektorsystems (T2' = 12' + 13') umgelenkt ist.

7. Zweistrahl-Interferometer nach Anspruch 2, dadurch gekennzeichnet, daß das starre Pendel ein zweiarmiges Pendel ist und daß beide bewegbaren Retroreflektoren (3'', 12'') an den Armen (22'', 23'') des Pendels (20'') so befestigt sind, daß die bewegbaren Retroreflektoren (3'', 12'') um eine gewisse Weglänge (a'') versetzt einander gegenüberliegend angeordnet sind und daß neben dem Strahlteiler (1'') ein Umlenkspiegel (21'') vorgesehen ist, der die durch den Strahlteiler (1'') durchgelassene Teilstrahlung (S2'') auf den bewegbaren Retroreflektor (12'') des weiteren vollkompensierenden optischen Reflektorsystems (T2'' = 12'' + 13'') umlenkt.

8. Zweistrahl-Interferometer nach einem der Ansprüche 1 bis 7, dadurch gekennzeichnet, daß bei Verwendung eines mit seinem Schwerpunkt außerhalb des Pendellagers (7) liegenden starren Pendels ein Auswuchtgewicht (14) am Ende eines Hilfsarmes (15) vorgesehen ist, wobei das Auswuchtgewicht so bemessen ist, daß der Schwerpunkt des Pendels (20) mit Auswuchtgewicht (14) in die Pendelachse fällt.

9. Zweistrahl-Interferometer nach Anspruch 8, dadurch gekennzeichnet, daß bei Anordnung der Pendelachse in Richtung des Vektors (G) eines Schwerefeldes diese Achse (7) mittels eines Fadens (18) an einem Träger (19) befestigt und das Pendellager von Kugellagern (16, 17) gebildet ist.

10. Zweistrahl-Interferometer nach einem der Ansprüche 1 bis 9, dadurch gekennzeichnet, daß die voll kompensierenden optischen Reflektorsysteme von einer Kombination von Tripelspiegel bzw. Kubusecke als Vollprisma/rückreflektierendem Planspiegel, d. h. einem Terrien-System, gebildet sind.

11. Zweistrahl-Interferometer nach einem der Ansprüche 1 bis 9, dadurch gekennzeichnet, daß die voll kompensierenden optischen Reflektorsysteme von einer Kombination Cat's eye in Spiegel- oder Linsenausführung/rückreflektierendem Planspiegel gebildet sind.

12. Zweistrahl-Interferometer nach einem der Ansprüche 2 bis 9, dadurch gekennzeichnet, daß die voll kompensierenden optischen Systeme (T1, T1', T1'', T2, T2', T2'') durch teilkompensierende optische Reflektorsysteme ersetzt sind, die aus der Kombination Dachkantspiegel bzw. Prisma/feststehender rückreflektierender Planspiegel bestehen.

## Claims

1. Double-beam interferometer for Fourier spectroscopy in particular for the beam measurement in cryostats on board spacecraft consisting of a beam divider (1) arranged in the measuring beam path; a first reflector system, a second reflector system and a detector system (5) for the registration of the measuring beam, at least one of the two reflector systems having a movable and rotatably mounted retroreflector (3) and a back reflecting fixed mirror (4), characterised in that the movable retroreflector (3) is a part of a fully compensating optical reflector system (T1) and in that this movable retroreflector (3) is fixed to a stiff pendulum (6) which is guided over the scan region continuously, practically uniformly and frictionless with the exception of the mounting friction of the pendulum.

2. Double-beam interferometer according to claim 1 characterised in that also the further reflector system (T2, T2', T2'') is a fully compensating optical reflector system having a further movable retroreflector (12, 12', 12'') which is secured together with the one retroreflector (3, 3', 3'') on the stiff pendulum (20, 20', 20'').

3. Double-beam interferometer according to claim 2 characterised in that the stiff pendulum is a doublearmed pendulum and in that both movable retroreflectors (3, 12) are secured in each case on the end of one arm (8, 10) of the two-armed pendulum (20) whose arms are arranged orthogonally to one another.

4. Double-beam interferometer according to claim 3 characterised in that both movable retroreflectors (3, 12) are arranged at the same distance from the pendulum mount (7) on the arms (8, 10) of the double-armed pendulum (20).

5. Double-beam interferometer according to claim 4 characterised in that the movable retroreflectors are formed from triple mirrors, cubical angles as full prisms, or cats eyes in mirror or lens embodiment and the back reflecting fixed mirrors (4, 13) serving for supplementing the retroreflectors for full compensating of the optical reflector system are omitted.

6. Double-beam interferometer according to claim 2 characterised in that the stiff pendulum is a one-armed pendulum and in that both movable retroreflectors (3', 12') are secured to this pendulum (8'), the partial beam (S2') transmitted from the beam divider (1') being pivoted by a pivot mirror (21') on the movable retroreflector (12') of the further fully compensating optical reflector system (T2' = 12' + 13').

7. Double-beam interferometer according to claim 2 characterised in that stiff pendulum is a two-armed pendulum and in that both movable retroreflectors (3'', 12'') are secured on the arms (22'', 23'') of the pendulum (20'') in such manner that the movable retroreflectors (3'', 12'') are arranged at a certain spacing (a'') and are opposite one another and in that in addition to the beam divider (1'') a pivot mirror (21'') is provided which pivots the partial beam (S2'') transmitted by the beam divider (1'') on the movable retroreflector (12'') of the further fully compensating optical reflector system (T2'' = 12'' + 13'').

8. Double-beam interferometer according to one of claims 1 to 7 characterised in that with use of a stiff pendulum lying with its center of gravity outside the pendulum pivot (7) a balance weight (14) is provided on the end of an auxiliary arm (15), the balance weight being so chosen that the center of gravity of the pendulum (20) falls with the balance weight (14) in the pendulum axis.

9. Double-beam interferometer according to claim 8 characterised in that with arrangement of the pendulum axis in the direction of the vector (G) of a gravity field, this axis (7) is secured by means of a thread (18) on a carrier (19) and the pendulum pivot is formed by ball bearings (16, 17).

10. Double-beam interferometer according to one of claims 1 to 9 characterised in that the fully compensating optical reflector system is formed from a combination of triple mirror or cubical angles as full prism/back reflecting plane mirror, i.e. a terrien system.

11. Double-beam interferometer according to one of claims 1 to 9 characterised in that the fully compensating optical reflector system is formed from a combination of cats eye in mirror or lens embodiment/back reflecting plane mirror.

12. Double-beam interferometer according to one of claims 2 to 9 characterised in that the fully compensating optical systems (T1, T1', T1'', T2, T2', T2'') are replaced by partially compensating optical reflector systems which consist of the combination of roof angle mirror or prism/fixed back reflecting plane mirror.

## Revendications

1. Interféromètre à deux faisceaux pour la spectroscopie de Fourier, en particulier pour la mesure de faisceaux en cryostats, à bord d'engins spatiaux, comprenant un diviseur de faisceau (1) disposé sur la trajectoire du faisceau de mesure, un premier ensemble réflecteur, un deuxième ensemble réflecteur et un ensemble détecteur (5) pour l'enregistrement du faisceau de mesure, dans lequel au moins un des deux ensembles réflecteurs comporte un rétroréflecteur (3) monté mobile en rotation ainsi qu'un miroir fixe (4) à réflexion en retour, caractérisé en ce que le rétroréflecteur mobile (3) est une partie d'un ensemble optique réflecteur (T1) à compensation totale et ce rétroréflecteur mobile (3) est fixé à un pendule rigide (6) qui est guidé dans la zone de balayage d'une manière continue, pratiquement uniforme, et sans frottements à l'exception du frottement de l'axe de suspension du pendule.

2. Interféromètre à deux faisceaux selon la revendication 1, caractérisé en ce que l'autre ensemble réflecteur (T2, T2', T2") est aussi un ensemble optique réflecteur à compensation totale ayant un autre rétroréflecteur mobile (12, 12', 12"), qui est fixé au pendule rigide (20, 20', 20") en même temps que le rétroréflecteur (3, 3', 3").

3. Interféromètre à deux faisceaux selon la revendication 2, caractérise en ce que le pendule rigide est un pendule à deux bras et que les deux rétroréflecteurs mobiles (3, 12) sont fixés chacun à l'extrémité d'un bras (8, 10) du pendule à deux bras (20), ces bras étant orthogonaux entre eux.

4. Interféromètre à deux faisceaux selon la revendication 3, caractérisé en ce que les deux rétroréflecteurs mobiles (3, 12) sont placés à égale distance de l'axe de suspension (7) sur les bras (8, 10) du pendule à deux bras (20).

5. Interféromètre à deux faisceaux selon la revendication 4, caractérisé en ce que les rétroréflecteurs mobiles sont constitués par des miroirs triédriques, des sommets de cube constituant des prismes complets ou par des catadioptres du type miroir ou lentille, et les miroirs fixes (4, 13) à réflexion en retour utilisés pour compléter les rétroréflecteurs de l'ensemble optique réflecteur à compensation totale sont supprimés.

6. Interféromètre à deux faisceaux selon la revendication 2, caractérisé en ce que le pendule rigide est un pendule à un bras et les deux rétroréflecteurs mobiles (3', 12') sont fixés à ce pendule (8'), cependant que le faisceau partiel (S2') qui a traversé le diviseur de faisceau (1') est dévié par un miroir de déviation (21') sur le rétroréflecteur mobile (12') de l'autre ensemble optique réflecteur à compensation totale (T2' = 12' + 13').

7. Interféromètre à deux faisceaux suivant la revendication 2, caractérisé en ce que le pendule rigide est un pendule à deux bras et les deux rétroréflecteurs mobiles (3", 12") sont fixés sur les bras (22", 23") de ce pendule (20") de sorte que les rétroréflecteurs mobiles (3", 12") sont décalés entre eux d'un certain tronçon de trajectoire (a") en se faisant face, tandis qu'à côté du diviseur de faisceau (1") il est prévu un miroir de déviation (21") qui dévie le faisceau partiel (S2") qui a traversé le diviseur de faisceau (1") sur le rétroréflecteur mobile (12") de l'autre ensemble optique réflecteur à compensation totale (T2" = 12" + 13").

8. Interféromètre à deux faisceaux selon l'une quelconque des revendications 1 à 7, caractérisé en ce que, pour l'utilisation d'un pendule rigide dont le centre de gravité est à l'extérieur de l'axe de suspension (7) du pendule, il est prévu un poids d'équilibrage (14) à l'extrémité d'un bras auxiliaire (15), ce poids d'équilibrage étant dimensionné de manière que le centre de gravité du pendule (20) se trouve avec le poids d'équilibrage (14) sur l'axe de suspension du pendule.

9. Interféromètre à deux faisceaux selon la revendication 8, caractérisé en ce que, pour que l'axe du pendule soit disposé en direction du vecteur (G) d'un champ de gravitation, cet axe (7) est fixé par un fil (18) à un support (19) et le palier de l'axe du pendule est constitué par des roulements à billes (16, 17).

10. Interféromètre à deux faisceaux selon l'une quelconque des revendications 1 à 9, caractérisé en ce que les ensembles optiques réflecteurs à compensation totale sont obtenus par la combinaison: miroir triple ou sommet de cuve constituant un prisme entier/miroir plan à réflexion en retour, c'est-à-dire par un ensemble »Terrien«.

11. Interféromètre à deux faisceaux selon l'une quelconque des revendications 1 à 9, caractérisé en ce que les ensembles optiques réflecteurs à compensation totale sont obtenus par la combinaison: catadioptres en miroir ou en lentille/miroir plan à réflexion en retour.

12. Interféromètre à deux faisceaux selon l'une quelconque des revendications 2 à 9, caractérisé en ce que les ensembles optiques à compensation totale (T1, T1', T1", T2, T2', T2") sont remplacés par des ensembles optiques réflecteurs à compensation partielle, qui sont obtenus par la combinaison: miroir triédrique ou prisme/miroir plan fixe à réflexion en retour.

# Fig.1

# Fig. 2

0 034 325

Fig.3

Fig.4

15

# Fig.5

# Fig.6